# EUROPEAN PATENT APPLICATION

(11) **EP 1 944 959 A1**
(43) Date of publication of application: **16.07.2008**
(21) Application number: 07123773.9
(22) Date of filing: 20.12.2007
(51) Int. Cl.: H04N 1/053, H04N 1/50

(54) **Auto color registration apparatus and method thereof**

(30) Priority: 15.01.2007 KR 20070004314
(71) Applicant: Samsung Electronics Co., Ltd, Suwon-si, Gyeonggi-do 442-742 (KR)
(72) Inventor: Park, Sang Sin, Gyeonggi-do (KR)
(74) Representative: Waddington, Richard

(57) **Abstract**

An auto color registration apparatus and a method thereof capable of improving the precision of a color registration operation, the auto color registration apparatus includes: a color image sensing module (60) to sense color image patterns printed on a transfer belt; a first correction value calculating module (61) to calculate a first color registration correction value for each color by calculating positions of the colors; a correction coefficient calculating module (62) to calculate a correction coefficient of one or more blocks of each of the colors, the one or more blocks formed from first color registration patterns that are printed according to the first color registration correction values; a second correction value calculating module (63) to calculate a second color registration correction value for each block using the corresponding correction coefficient; and a registration controller (64) to print a second color registration pattern according to the second color registration correction value.

## Description

### BACKGROUND OF THE INVENTION

### 1. Field of the Invention

Aspects of the present invention relate to an auto color registration apparatus and, more particularly, to an auto color registration apparatus and a method thereof capable of improving the precision of a color image registration operation.

### 2. Description of the Related Art

To form an electrostatic latent image, an image forming device (such as a color laser printer or a copy machine) charges a photosensitive medium before irradiating a laser beam onto the photosensitive medium so that the photosensitive medium is selectively exposed. Then, after developing the electrostatic latent image by using a color toner of a developing device, the image forming device transfers the electrostatic latent image onto a print medium through pressing and heating, thereby printing an image.

In general, the toner colors used in the developing device include cyan (C), magenta (M), yellow (Y), and black (B). The four colors are transferred to a print medium such that the four colors are overlapped with each other to form a complete image. Particularly, in order to provide a high-quality image, unit images formed by the four colors must be accurately overlapped with each other. However, since errors may occur when manufacturing an optical lens or when color units are aligned incorrectly in the developing device, color registration errors may result. Such a color registration error must be considered, particularly in a single-pass color image forming apparatus including a developing device having a plurality of color units arranged in a series. Accordingly, a color registration operation capable of overcoming the color registration errors is required.

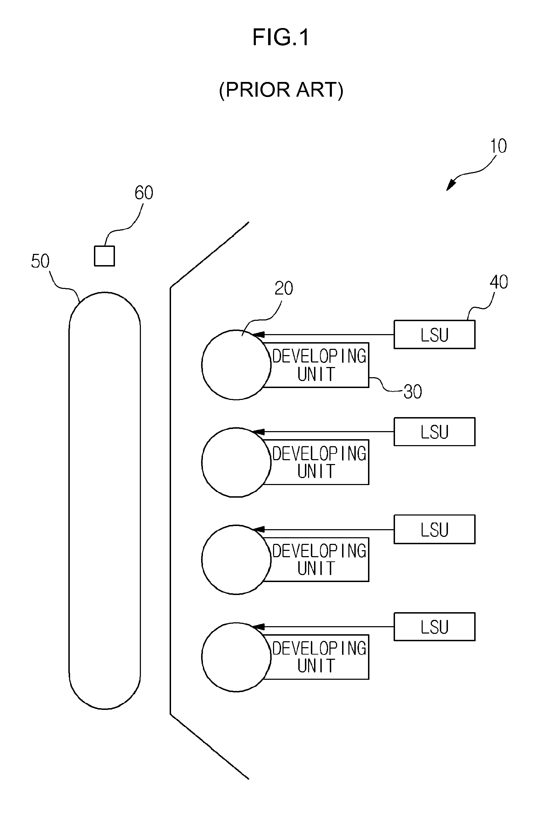

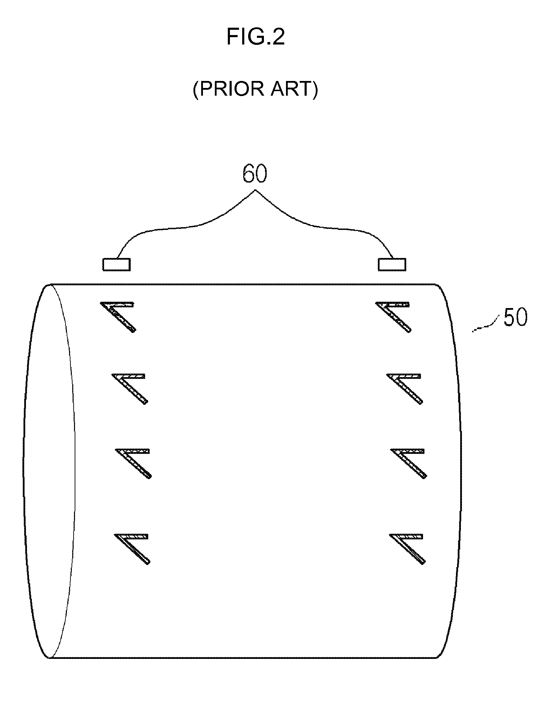

FIG. 1 is a schematic view illustrating the internal structure of a typical single-pass type color laser printer 10. FIG. 2 is a view illustrating color patterns printed on a paper transfer belt 50 in order to perform the conventional color registration operation. As shown in FIGS. 1 and 2, a conventional color registration apparatus includes a drum 20, a developing unit 30, a laser scanning unit (LSU) 40, a paper transfer belt (PBT) 50, and a color registration sensor 60. The color registration sensor 60 is provided at one side of the paper transfer belt 50, and color image patterns (AcPts) are printed on the paper transfer belt 50. The color image patterns (AcPts) include a plurality of patterns (Pt(C), Pt(M), Pt(Y), and Pt(B)) corresponding to the four colors of cyan (C), magenta (M), yellow (Y), and black (B). The color registration sensor 60 receives light reflected from image patterns according to the colors of the image patterns so as to output detection signals. Positions of color image patterns according to the structure thereof can be recognized based on the detection signals. In addition, the positions of other color image patterns can be corrected based on the position of one color image pattern. As a result, the images can be precisely overlapped with each other according to the colors thereof.

More precisely, time intervals between the color image patterns are calculated. Color registration correction values of the color image patterns are determined based on the position of any one color pattern by using the calculated time intervals. Thereafter, the color registration correction values are applied to a correction unit capable of correcting any color image registration errors when images are printed. As a result, images are corrected according to colors such that the images can be exactly overlapped with each other.

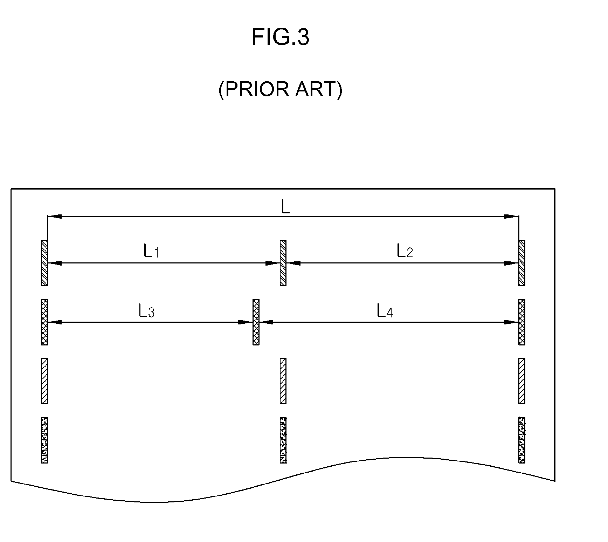

FIG. 3 is a view showing images printed on a print medium by applying the conventional color registration correction values. As shown in FIG. 3, since a conventional color image registration operation is performed based on color image patterns printed at right and left sides of the paper transfer belt 50, color images at the middle portion of the print medium cannot be accurately aligned when printing is actually performed. In addition, although the color images may be properly positioned in the first stage of printing, as the printing jobs are performed several times, there occurs a difference between scanning speeds of laser scanning units (LSUs 40), which are installed according to colors in order to expose a photosensitive medium. Accordingly, the color images may not be printed at proper positions of a print medium.

### SUMMARY OF THE INVENTION

Accordingly, aspects of the present invention provide an auto color registration apparatus and a method thereof in which the precision of an auto color registration operation can be improved such that color registration errors can be reduced in a middle portion of a print medium as well as left and right sides of the print medium.

Additional aspects and/or advantages of the invention will be set forth in part in the description which follows and, in part, will be obvious from the description, or may be learned by practice of the invention.

According to the present invention there is provided an apparatus and method as set forth in the appended claims. Other features of the invention will be apparent from the dependent claims, and the description which follows.

According to an aspect of the present invention, there is provided an auto color registration apparatus for an image forming device that forms images from one or more colors, the apparatus including: a color image sensing module to sense color image patterns printed on a transfer belt; a first correction value calculating module to calculate a first color registration correction value for each of the colors by calculating positions of the colors; a correction coefficient calculating module to calculate a correction coefficient of one or more blocks of each of the colors, the one or more blocks formed from first color registration patterns that are printed according to the first color registration correction values; a second correction value calculating module to calculate a second color registration correction value for each of the blocks using the corresponding correction coefficient; and a registration controller to print second color registration patterns according to the second color registration correction values.

Preferably, the block may be formed by dividing each of the first color registration patterns by a predetermined unit.

Preferably, at least two blocks may be formed from each of the first color registration patterns.

Preferably, the apparatus may further include a measurement unit to measure a length between each of the blocks for each of the first color registration patterns.

Preferably, the correction coefficient calculating module may calculate the correction coefficient of each block by using lengths between blocks of a reference color and lengths between blocks of non-reference colors.

Preferably, the correction coefficient of a first block of a first non-reference color may be equal to a length between a first block and a second block of the reference color divided by a length between the first block and a second block of the first non-reference color.

Preferably, the color image sensing module may include an optical sensor.

According to another aspect of the present invention, there is provided a color registration method for an image forming device that forms images from one or more colors, of the method including: sensing color image patterns corresponding to each of the colors and printed on a transfer belt; calculating a first color registration correction value for each of the colors by calculating positions of the colors; calculating a correction coefficient of one or more blocks of each of the colors, the one or more blocks formed from first color registration patterns that are printed according to the first color registration correction values; calculating a second color registration correction value for each of the blocks using the corresponding correction coefficient; and printing second color registration patterns according to the second color registration correction values.

Preferably, the one or more blocks may be formed by dividing the first color registration patterns by a predetermined unit.

Preferably, at least two blocks may be formed from each of the first color registration patterns.

Preferably, the method may further include: measuring a length between each of the blocks for each of the first color registration patterns.

Preferably, the calculating of the correction coefficients may include calculating the correction coefficient of the one or more blocks for each of the first color registration patterns by using lengths between blocks of a reference color and lengths between blocks of non-reference colors.

Preferably, the correction coefficient of a first block for a first non-reference color may be equal to the length between a first block and a second block of the reference color divided by the length between the first block and a second block of the first non-reference color.

According to another aspect of the present invention, there is provided an auto color registration apparatus for an image forming device that forms images from one or more colors according to color registration correction values calculated from color image patterns, the auto color registration apparatus including: a correction coefficient calculating module to calculate a correction coefficient of one or more blocks of each of the colors, the one or more blocks formed from color registration patterns that are printed according to the color registration correction values; and a second correction value calculating module to calculate a second color registration correction value for each of the blocks using the corresponding correction coefficient, wherein the image forming device corrects the images according to the second color registration correction values.

According to another aspect of the present invention, there is provided a color registration method for an image forming device that forms images from one or more colors according to color registration correction values calculated from color image patterns, the method including: calculating a correction coefficient of one or more blocks of each of the colors, the one or more blocks formed from color registration patterns that are printed according to the color registration correction values; and calculating a second color registration correction value for each of the blocks using the corresponding correction coefficient, wherein the image forming device corrects the images according to the second color registration correction values.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a schematic view showing the internal structure of a typical single-pass type color laser printer;
FIG. 2 is a view showing color patterns printed on a paper transfer belt in order to perform the conventional auto color registration;
FIG. 3 is a view showing result images printed on a print medium by applying the conventional color registration correction values;
FIG. 4 is a schematic view showing a laser color printer using an auto color registration apparatus according to an embodiment of the present invention;
FIG. 5 is a block diagram showing an auto color registration apparatus according to an embodiment of the present invention; and
FIG. 6 is a flowchart showing a color registration method according to an embodiment of the present invention.

### DETAILED DESCRIPTION OF THE EMBODIMENTS

Reference will now be made in detail to the present embodiments of the present invention, examples of which are illustrated in the accompanying drawings, wherein like reference numerals refer to the like elements throughout. The embodiments are described below in order to explain the present invention by referring to the figures.

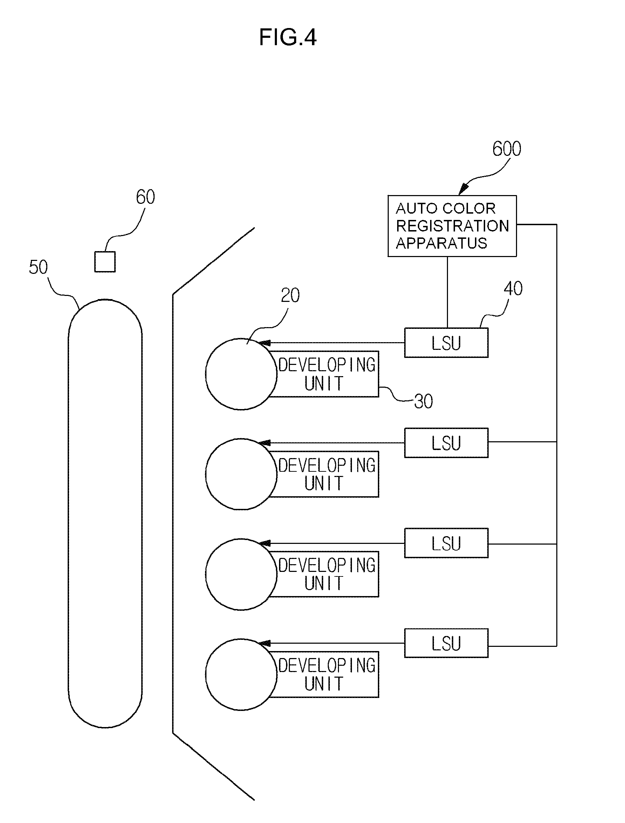

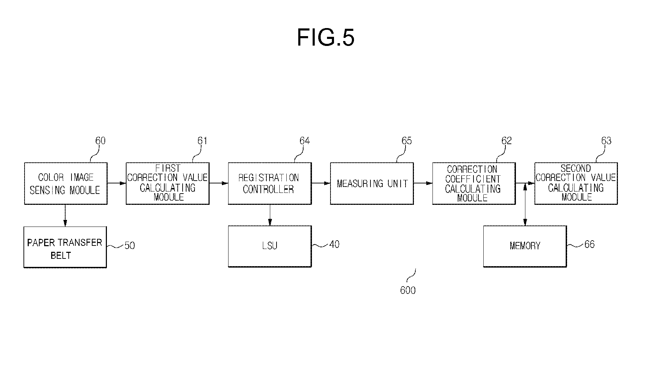

FIG. 4 is a schematic view showing a laser color printer using an auto color registration apparatus 600 according to an embodiment of the present invention. FIG. 5 is a block diagram showing an auto color registration apparatus 600 according to an embodiment of the present invention. Referring to FIGS. 4 and 5, the auto color registration apparatus 600 includes a color image sensing module 60, a first correction value calculating module 61, a correction coefficient calculating module 62, a second correction value calculating module 63, and a registration controller 64. It is understood that aspects of the present invention may be adapted to a single pass color registration apparatus including a plurality of developing devices 30 corresponding to colors and arranged in a series, as shown in FIG. 4. It is understood that according to other aspects, the auto color registration apparatus 600 can include only the correction coefficient calculating module and the second correction value calculating module, such that the auto color registration apparatus 600 is adapted to, for example, an image forming device performing the conventional color registration operation. Further, the auto color registration apparatus 600 can be adapted to multipass systems and/or to printers that include additional capabilities, such as scanning, copying, and/or faxing in other aspects of the invention. A color laser printer is provided in this description as a non-limiting example to explain aspects of the present invention.

The color laser printer includes a plurality of photosensitive drums 20 in order to form images according to colors. Once the images according to colors have been formed by the photosensitive drums 20, a print medium stacked in a paper feeding unit is picked up. Thereafter, the print medium is moved towards a transfer unit and passes between the photosensitive drums 20 and a paper transfer belt 50 of the transfer unit. At this time, the color images formed by the photosensitive drums 20 are transferred onto the print medium by corresponding transfer rollers. The color images transferred onto the print medium are fixed when the print medium passes through a fixing unit that applies high-temperature heat and pressure. Then, the print medium is discharged to an outside of the color laser printer.

Meanwhile, in order to register colors, color image patterns (AcPts) are printed on the paper transfer belt 50. The color image patterns (AcPts) printed on the paper transfer belt 50 include a plurality of patterns (such as Pt(Y), Pt(M), Pt(C), and Pt(B) corresponding to the four colors of yellow (Y), magenta (M), cyan (C), and black (B)). Then, the color image sensing module 60 senses the AcPts printed on the paper transfer belt 50 in order to register the colors, and provides signals for the detected AcPts to the first correction value calculating module 61.

The AcPts correspond to a plurality of colors whereby each color pattern includes a reference pattern (which is horizontally arranged) and a test pattern (which is tilted at a predetermined angle). While not required in all aspects, the color image sensing module 60 may include an optical sensor having a light emitting diode and a photodiode. The optical sensor is a device that acts like a visual sense organ of a human being. In general, the optical sensor senses an amount of light, a shape, a state, and a motion of an object. Although in the past, the optical sensor sensed only natural light, optical sensors today emit light to an object and then receive light reflected from the object so as to find the motion or the speed of the object. The optical sensor according to aspects of the present invention receives light incident onto and then reflected from toner layers according to AcPts printed on the paper transfer belt 50 so as to sense the AcPts. However, it is understood that other types of sensors can be used and that the optical sensor need not also emit light in all aspects of the invention.

The first correction value calculating module 61 selects one color from among colors of the detected AcPts and calculates the position of another color based on the position of the selected color. In more detail, if, for example, the four colors are yellow (Y), magenta (M), cyan (C), and black (B), time intervals between the yellow, magenta, and cyan patterns may be calculated based on black (B), which is a reference color. Then, first color registration correction values are calculated for the colors based on the calculated time intervals so that unit images according to yellow (Y), magenta (M), cyan (C), and black (B) can be accurately overlapped with each other.

After calculating the first color registration correction values, the correction coefficient calculating module 62 calculates and stores block correction coefficients for the colors by using first color registration patterns, which are resultant patterns printed based on the calculated first color registration correction values. Specifically, after the first color registration correction values are calculated, the first color registration correction values are transmitted to the registration controller 64 to control the LSU 40. The registration controller 64 then performs a control operation to print the first color registration patterns based on the first color registration correction values. Then, the correction coefficient calculating module 62 calculates block correction coefficients for each of the colors by using the first color registration patterns and stores the block correction coefficients in a memory 66. The memory 66 may be a volatile memory (such as RAM) or a non-volatile memory (such as flash memory or a hard disk drive). Furthermore, the memory may be an external storage device connected to the auto color registration apparatus 600 through a wired or wireless connection.

As shown in FIG. 3, although the first color registration patterns match with each other at left and right sides of a print medium with respect to the colors, the first color registration patterns may be unaligned at a middle portion of the print medium. Accordingly, the first color registration patterns may include lines or points in order to easily measure the misalignment degree of the first color registration patterns with respect to each of the colors. Furthermore, one or more blocks may be formed by dividing the first color registration pattern by a predetermined unit. The first color registration pattern is more minutely divided when more blocks are formed. Accordingly, the color registration may be more precisely achieved.

The registration controller 64 controls the first color registration patterns to be printed on a print medium by using the first color registration correction values. Moreover, the first color registration patterns are formed such that the misalignment degree of the colors can be easily measured. Furthermore, the correction coefficient calculating module 62 calculates block correction coefficients for the colors by using a block length of a reference color and block lengths of each other color. The correction coefficients of blocks of the colors are calculated using an equation: block correction coefficient for each color = block length for a reference color / block length for each color.

For example, as shown in FIG. 3, when the whole length of blocks of the first color registration pattern is L (where the length refers to a distance between the furthest two blocks of the same color), the length L1 of a left block and the length L2 of a right block are 0.5L and 0.5L, respectively, at the reference color (for example, black). Moreover, the length L3 between a left block and a middle block and the length L4 between a right block and the middle block are 0.49L and 0.51 L, respectively, at a first non-reference color (for example, cyan). Therefore, a correction coefficient of the left block for the first color can be calculated as 0.5/0.49 (i.e., 1.0204), and a correction coefficient of the right block for the first color can be calculated as 0.5/0.51 (i.e., 0.980). Correction coefficients may be calculated with respect to the remaining two non-reference colors (for example, yellow and magenta) in the same manner. While described as being divided in two, it is understood that the blocks can be further divided and the blocks need not be precisely in the center of the page in all aspects.

The auto color registration apparatus 600 according to aspects of the present invention further includes a measuring unit 65 to measure block lengths of colors of the first color registration pattern printed on the print medium. That is, the measuring unit 65 measures the block lengths for each of the colors and transmits the measured block lengths to the correction coefficient calculating module 62. If there are two blocks for example, the measuring unit 65 divides the blocks into a right block and a left block with respect to each color so as to measure the length between the right block and the left block. If there are three blocks, the measuring unit 65 divides the blocks into a right block, a left block, and a middle block with respect to each color so as to measure the lengths between the right block and the middle block, and between the left block and the middle block.

After calculating correction coefficients of blocks for each color as described above, the second correction value calculating module 63 calculates second color registration correction values for the blocks based on the stored correction coefficients. The calculating of the second color registration correction values is performed whenever color image registration is performed. Each second color registration correction value may be obtained by multiplying the correction coefficient value by a time interval. For example, on the assumption that the period of a video clock is 50 nsec and the first color registration correction value is 50 nsec with respect to cyan (C), a second color registration correction value for a left block of the cyan (C) becomes 50 nsec × (0.5/0.49) = 51.0204 nsec. That is, this value is obtained by multiplying a coefficient value 0.5/0.49 of the left block by 50 nsec. Moreover, a second color registration correction value for a right block of cyan (C) becomes 50 nsec × (0.5/0.51) = 49.0196 nsec, which is obtained by multiplying a correction coefficient 0.5/0.51 of the right block by 50 nsec.

The registration controller 64 then performs a control operation to print second color registration patterns by using the second color registration correction values. In other words, a color image registration operation is performed by printing the second color registration patterns using the second color registration correction values based on the correction coefficients stored in the memory 66. The printed second registration patterns may then be read by the sensing module 60, and the results may be stored and used for auto color registration when printing images in some aspects of the present invention.

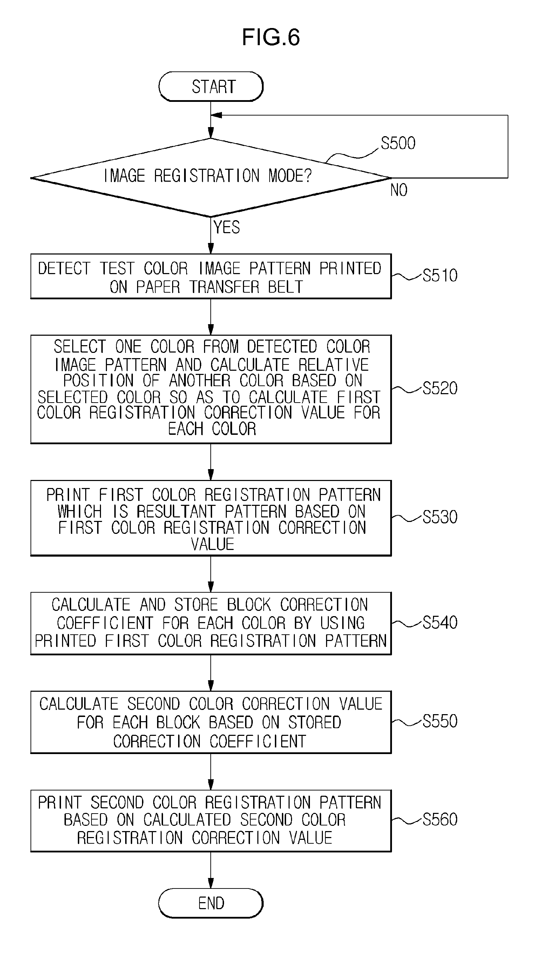

Hereinafter, the registration procedure of the auto color registration apparatus will be described. FIG. 6 is a flowchart showing a color registration method according to an embodiment of the present invention. As shown in FIG. 6, it is first determined whether an image registration mode is selected or initiated (operation S500). If the image registration mode is selected or initiated, a color image pattern printed on the paper transfer belt is detected (operation S510). If not initiated, the apparatus waits until the initiation of the image registration mode.

Then, one color is selected from among colors of the detected color image pattern, and relative positions of other colors are calculated based on the selected color so that first color registration correction values are calculated for each of the colors (operation S520).

Next, first color registration patterns, which are resultant patterns based on the first color registration correction values, are printed (operation S530). Correction coefficient values of blocks for each of the colors are calculated from the first color registration patterns and stored (operation S540). For example referring to the printed images illustrated in FIG. 3, when the whole length of blocks of the first color registration pattern is L (where the length refers to a distance between the furthest two blocks of the same color), the length L1 between a left block and a middle block and the length L2 between a right block and the middle block are 0.5L and 0.5L, respectively, at the reference color (for example, black). Moreover, the length L3 between a left block and a middle block and the length L4 between a right block and the middle block are 0.49L and 0.51L, respectively, at a first non-reference color (for example, cyan). Therefore, a correction coefficient of the left block for the first color may be calculated as 0.5/0.49, and a correction coefficient of the right block for the first color may be calculated as 0.5/0.51. In this case, the block is formed by dividing the first color registration pattern by a predetermined unit. According to an aspect of the present invention, at least two blocks are formed.

Then, second color registration correction values for each block are calculated by using the stored correction coefficients (operation S550). The calculating of the second color registration correction values is performed whenever color image registration is performed. Each second color registration value may be obtained by multiplying the correction coefficient value by a time interval. For example, on the assumption that the period of a video clock is 50 nsec and the first color registration correction value is 50 nsec with respect to cyan (C), a second color registration correction value for a left block of the cyan (C) becomes 50 nsec × (0.5/0.49) = 51.0204 nsec. That is, the value is obtained by multiplying a coefficient value 0.5/0.49 of the left block by 50 nsec. Moreover, a second color registration correction value for a right block of cyan (C) becomes 50 nsec× (0.5/0.51) = 49.0196 nsec, which is obtained by multiplying a correction coefficient 0.5/0.51 of the right block by 50 nsec.

After calculating the second color registration correction values (operation S550), second color registration patterns are printed by using the second color registration correction values (operation S560). Then, the second color registration patterns may be detected and the results may be stored in a memory for use in printing images in some aspects of the present invention.

As described above, in an auto color registration apparatus and a method thereof according to aspects of the present invention, second color registration correction values are calculated by using correction coefficients, thereby improving the precision of auto color registration. In addition, auto color registration errors can be reduced in a middle portion as well as right and left portions of a print medium.

While not required in all aspects, it is understood that aspects of the invention can be implemented as computer software stored on a computer-readable medium and executed using one or more computers and/or processors.

Although a few embodiments of the present invention have been shown and described, it would be appreciated by those skilled in the art that changes may be made in this embodiment without departing from the principles of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An auto color registration apparatus for an image forming device that forms images from one or more colors, the auto color registration apparatus comprising:
a color image sensing module (60) to sense color image patterns corresponding to each of the colors and printed on a transfer belt of the image forming apparatus;
a first correction value calculating module (61) to calculate a first color registration correction value for each of the colors by calculating positions of the color image patterns;
a correction coefficient calculating module (62) to calculate a correction coefficient of one or more blocks of each of the colors, the one or more blocks formed from first color registration patterns that are printed according to the first color registration correction values;
a second correction value calculating module (63) to calculate a second color registration correction value for each of the blocks using the corresponding correction coefficient; and
a registration controller (64) to print second color registration patterns according to the second color registration correction values.

2. The auto color registration apparatus as claimed in claim 1, wherein the one or more blocks are formed by dividing each of the first color registration patterns by a predetermined unit.

3. The auto color registration apparatus as claimed in claim 1 or claim 2, wherein at least two blocks are formed from each of the first color registration patterns.

4. The auto color registration apparatus as claimed in any preceding claim, further comprising a measurement unit to measure a length between each of the blocks for each of the first color registration patterns.

5. The auto color registration apparatus as claimed in any preceding claim, wherein the correction coefficient calculating module (62) calculates the correction coefficient of the one or more blocks for each of the first color registration patterns by using lengths between blocks of a reference color and lengths between blocks of non-reference colors.

6. The auto color registration apparatus as claimed in claim 5, wherein the correction coefficient of a first block of a first non-reference color is equal to a length between a first block and a second block of the reference color divided by a length between the first block and a second block of the first non-reference color.

7. The auto color registration apparatus as claimed in claim 6, wherein the first block is positioned on a side of a print medium and the second block is positioned in a middle of the print medium.

8. The auto color registration apparatus as claimed in any preceding claim, wherein the color image sensing module (60) comprises an optical sensor.

9. The auto color registration apparatus as claimed in any preceding claim, wherein the first correction value calculating module (61) calculates the first color registration correction values for each of the colors by selecting one color image pattern and calculating relative positions of other color image patterns based on the selected color image pattern.

10. The auto color registration apparatus as claimed in any preceding claim, further comprising a memory to store the correction coefficients.

11. The auto color registration apparatus as claimed in any preceding claim, wherein the second correction value calculating module (63) calculates each of the second color registration values by multiplying the corresponding correction coefficient by a time interval.

12. A color registration method for an image forming device that forms images from one or more colors, the method comprising:
sensing color image patterns corresponding to each of the colors and printed on a transfer belt;
calculating a first color registration correction value for each of the colors by calculating positions of the color image patterns;
calculating a correction coefficient of one or more blocks of each of the colors, the one or more blocks formed from first color registration patterns that are printed according to the first color registration correction values;
calculating a second color registration correction value for each of the blocks using the corresponding correction coefficient; and
printing second color registration patterns according to the second color registration correction values.

13. The registration method as claimed in claim 12, wherein the calculating of the correction coefficient of each of the blocks comprises forming the one or more blocks by dividing each of the first color registration patterns by a predetermined unit.

14. The registration method as claimed in claim 12 or claim 13, wherein the calculating of the correction coefficient of each of the blocks comprises forming at least two blocks from each of the first color registration patterns.

15. The registration method as claimed in any one of claims 12 to 14, further comprising measuring a length between each of the blocks for each of the first color registration patterns.

16. The registration method as claimed in any one of claims 12 to 14, wherein the calculating of the correction coefficients comprises calculating the correction coefficient of the one or more blocks for each of the first color registration patterns by using lengths between blocks of a reference color and lengths between blocks of non-reference colors.

17. The registration method as claimed in claim 16, wherein the calculating of the correction coefficient of the one or more blocks for each of the first color registration patterns by using the lengths between the blocks of a reference color and the lengths between the blocks of the non-reference colors comprises calculating a correction coefficient of a first block of a first non-reference color to be equal to a length between a first block and a second block of the reference color divided by a length between the first block and a second block of the first non-reference color.

18. An auto color registration apparatus for an image forming device that forms images from one or more colors according to color registration correction values calculated from color image patterns, the auto color registration apparatus comprising:
a correction coefficient calculating module (62) to calculate a correction coefficient of one or more blocks of each of the colors, the one or more blocks formed from color registration patterns that are printed according to the color registration correction values; and
a correction value calculating module to calculate another color registration correction value for each of the blocks using the corresponding correction coefficient,
wherein the image forming device corrects the images according to the another color registration correction values.

19. The apparatus as claimed in claim 18, further comprising a registration controller (64) to print other color registration patterns according to the another color registration correction values.

20. The auto color registration apparatus as claimed in claim 18 or claim 19, wherein the correction coefficient calculating module (62) calculates the correction coefficient of the one or more blocks for each of the color registration patterns by using lengths between blocks of a reference color and lengths between blocks of non-reference colors.
